# EUROPEAN PATENT SPECIFICATION

(11) **EP 2 723 184 B1**
(45) Date of publication and mention of the grant of the patent: **06.05.2015**
(21) Application number: 12727125.2
(22) Date of filing: 30.05.2012
(51) Int. Cl.: A23F 3/08, A23F 3/12, A23F 3/16

(54) **PROCESS FOR MANUFACTURING TEA PRODUCTS**
VERFAHREN ZUR HERSTELLUNG VON TEEPRODUKTEN
PROCÉDÉ POUR LA FABRICATION DE PRODUITS À BASE DE THÉ

(30) Priority: 27.06.2011 EP 11171425
(43) Date of publication of application: 30.04.2014
(73) Proprietor: Unilever PLC, London, Greater London EC4Y 0DY (GB); Unilever N.V., 3013 AL Rotterdam (NL)
(72) Inventor: SHARP, David, George, Bedford Bedfordshire MK44 1LQ (GB)
(74) Representative: Askew, Sarah Elizabeth
(86) International application number: PCT/EP2012/060190
(87) International publication number: WO 2013/000653

(56) References cited:
- EP-A1- 2 308 318
- WO-A1-2009/059924
- US-A1- 2005 176 939
- US-A1- 2009 117 229
- US-A1- 2009 202 676

## Description

### TECHNICAL FIELD OF THE INVENTION

The present invention relates to a process for manufacturing tea products. More particularly the present invention relates to a process which allows for the manufacture of tea juice by pressing heated tea leaves and to expressed tea juices produced by the process.

### BACKGROUND TO THE INVENTION

Beverages based on the tea plant (Camellia sinensis) have been popular throughout the world for many hundreds of years. Traditionally such beverages are produced by infusing leaf tea in hot water.

Although many consumers still enjoy beverages made from leaf tea, it is becoming increasingly popular to enjoy tea beverages prepared in more convenient ways. For example, tea beverages can be prepared from instant powders which are free from insoluble leaf tea and so dissolve rapidly and completely on contact with hot water. These powder products are usually manufactured by a process comprising extracting leaf tea with water and drying the resulting extract. Also popular are packaged ready-to-drink beverages which contain dissolved tea solids. Such ready-to-drink teas are usually manufactured from instant powders such as those described above or directly from extraction of tea leaf.

Consumers are also increasingly interested in foods and beverages which have undergone minimal processing and have a natural image and/or contain high levels of bioactive compounds. In view of this, efforts have been made to manufacture tea powders or ready-to-drink beverages from juice expressed from tea leaves as an alternative to tea extracts.

International patent application published as WO 2009/059924 (Unilever) discloses a process comprising the steps of: expressing juice from fresh tea leaves thereby to produce leaf residue and tea juice, wherein the amount of expressed juice is between 10 and 300 ml per kg of the fresh tea leaves; and processing the leaf residue to produce leaf tea and/or a tea extract.

International patent application published as WO 2009/059927 (Unilever) discloses a process comprising the steps of: providing fresh tea leaves comprising catechins; macerating the fresh tea leaves thereby to produce dhool; fermenting the dhool for a fermentation time (t_{F}) sufficient to reduce the content of catechins in the dhool to less than 50% of the content of catechins in the fresh tea leaves prior to maceration on a dry weight basis; and then expressing juice from the fermented dhool thereby to produce leaf residue and tea juice, wherein the amount of expressed juice is at least 50 ml per kg of the fresh tea leaves.

Whilst the juices produced by the processes of WO 2009/059924 and WO 2009/059927 are suitable for dilution to prepare beverages liked by many consumers, we have found that beverages produced from expressed tea juice can be considered by some consumers as being lacking in tea taste and/or appearance.

Surprisingly we have found that by expressing juice from the tea leaves at specific temperatures, juices can be produced with improved properties, especially in relation to tea taste and/or colour of beverages prepared from them.

### DEFINITIONS

### Tea

"Tea" for the purposes of the present invention means material from Camellia sinensis var. sinensis and/or Camellia sinensis var. assamica.

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" refers to uninfused tea leaves and/or stem that have never been dried to a water content of less than 30% by weight, and usually have a water content in the range 60 to 90%.

### Expressing Juice

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the fresh leaves during the expression step. However, in order to prevent significant extraction of tea solids by the solvent, the moisture content of the leaves during expression is that of fresh tea leaves as defined hereinabove. In other words, during the expression step, the moisture content of the tea leaves is between 30 and 90% by weight, more preferably between 60 and 90%. It is also preferred that the fresh leaves are not contacted with non-aqueous solvent (e.g. alcohols) prior to or during expression, owing to the environmental & economic problems associated with such solvents.

### Determination of Total Polyphenols

The total polyphenol content of a sample is determined using the Folin-Ciocalteu method as detailed in the International Standard published by the International Organization for Standardization as ISO 14502-1:2005(E).

### SUMMARY OF THE INVENTION

In a first aspect, the present invention provides a process comprising the steps of:
a) heating fresh tea leaves; and
b) expressing juice from the fresh tea leaves whilst the temperature of the fresh tea leaves is greater than 40 °C and less than 77 °C, thereby to produce leaf residue and tea juice.

By pressing juice from heated fresh tea leaves, juices can be produced with improved properties, especially in relation to tea taste and/or colour of beverages prepared from them. If the temperature of the fresh leaves is too high, however, the yield of juice may be low and/or the juice may be difficult to separate from the leaf residue.

In a second aspect, the present invention provides tea juice obtainable by the process of the first aspect.

The tea juices of the present invention are found to be suitable for dilution to produce beverages with a taste and colour more familiar to tea consumers. Without wishing to be bound by theory we believe that this may, in part, be due to the relatively high amount of caffeine with respect to polyphenols in the inventive juices.

Thus in a third aspect, the present invention provides an expressed tea juice comprising polyphenols and caffeine and wherein the weight ratio of caffeine to total polyphenols is at least 0.19.

### DETAILED DESCRIPTION

### Heating Fresh Tea Leaves

Step (a) of the process of the invention comprises heating fresh tea leaves.

The fresh tea leaves are preferably provided in freshly plucked form, i.e. without any further processing. The fresh tea leaves preferably comprise actively growing buds, e.g. in the form of the first two or three leaves together with the unopened bud (so-called "two-and-a-bud" and/or "three-and-a-bud" material).

The fresh tea leaves may be withered prior to step (a). If so, the tea leaves are typically withered for about 12 to 36 hours. Withering allows certain chemical and biochemical changes to occur and also reduces the moisture content of the leaves to around 35 to 70%. The biochemical and/or chemical changes taking place during withering may increase the yield of the volatile flavour compounds in tea.

The fresh tea leaves may be macerated to produce dhool prior to step (a). Maceration involves wounding the leaves e.g. by rolling and/or crushing the leaves i.e. to break down the plant tissue structure. In black tea manufacture this has the effect of liberating fermentable substrates and fermenting enzymes from within the plant cells and tissue. The maceration is preferably achieved by passing the fresh tea leaves through a cutting machine. Thus for the purpose of the invention the fresh tea leaves may be macerated by a maceration process using, for example, a CTC machine, rotorvane, ball mill, grinder, hammer mill, Lawri tea processor, Legg cutting machine, or tea rollers as in orthodox tea processing. Combinations of these maceration processes may also be used.

Where the juice is black tea juice, the dhool is typically fermented prior to step (a). The exact time required to produce the desired degree of fermentation will depend, amongst other things, on the temperature of the dhool, the degree of maceration of the dhool and the supply of oxygen to the dhool. Typically, however, the fermentation time is at least 30 minutes, more preferably at least 1 hour, more preferably still at least 1.5 hours, even more preferably at least 1.75 hours and most preferably from 2 to 24 hours. The preferred fermentation temperature is from 10 to 40°C, more preferably from 15 to 25°C. Too low a temperature results in a slow rate of fermentation whilst too high a temperature may result in deactivation of oxidative enzymes and/or generation of unwanted reaction products.

The fresh tea leaves, whether in freshly plucked form or in the form of dhool, are preferably heated in step (a) to a temperature of greater than 40 °C, more preferably at least 42 °C and most preferably at least 45 °C. It is preferred, however, that the heating temperature is not too high and is preferably below the temperature required to deactivate fermentation enzymes. In particular it is preferred that the heating temperature is less than 80 °C, more preferably less than 77 °C, more preferably still less than 75 °C, even more preferably less than 70 °C and most preferably less than 65 °C.

The purpose of the heating step (a) is to ensure that the temperature of the leaves during the expression step (b) is within the specified range. Thus there should be limited cooling allowed between steps (a) and (b). If heating is efficient enough it may be possible to perform steps (a) and (b) simultaneously, for example by pressing the leaves in a heated press. However in most cases where a large quantity of juice is required the thermal mass will be such that at least some of the heating needs to be performed prior to the expression step (b).

Heating can be effected by any means including, for example, contact with a hot conducting solid surface and/or contact with a heated fluid, such as hot gas, vapour and/or liquid. If hot liquid or vapour is used as a heat transfer medium, however, the quantity of liquid and vapour should be limited such that little or no extraction of tea solids into the liquid or vapour occurs. In particular it is preferred that the heating step does not modify the moisture content of the fresh leaves outside of the range of 60 and 90% by weight.

### Expression of Juice

Step (b) of the process of the invention comprises expressing juice from the fresh tea leaves whilst the temperature of the fresh tea leaves is greater than 40 °C and less than 77 °C, thereby to produce leaf residue and tea juice.

By pressing juice from heated fresh tea leaves, juices can be produced with improved properties, especially in relation to tea taste and/or colour of beverages prepared from them. In this respect it is preferred that the juice is expressed whilst the temperature of the fresh tea leaves is at least 42 °C, more preferably at least 45 °C and most preferably at least 47 °C.

If the temperature of the fresh leaves is too high, however, the yield of juice may be low and/or the juice may be difficult to separate from the leaf residue. Thus it is preferred that the juice is expressed whilst the temperature of the fresh tea leaves is less than 75 °C, more preferably less than 70 °C, more preferably still less than 65 °C and most preferably less than 60 °C.

If the amount of juice expressed is too low then it becomes difficult to separate the juice from the leaf residue and/or leads to an inefficient process. Thus it is preferred that the amount of expressed juice is at least 100 ml per kg of the fresh tea leaves, more preferably at least 150 ml, more preferably still at least 175 ml and most preferably at least 200 ml. When referring to the volume of juice expressed per unit mass of tea leaves lit should be noted that the mass of the tea leaves is expressed on an "as is" basis and not a dry weight basis. Thus the mass includes any moisture in the leaves.

It is also advantageous to limit the amount of juice expressed as this limits damage to the residual leaf and allows it to be used to manufacture tea products of at least conventional quality. Thus it is preferred that the amount of expressed juice is less than 800 ml per kg of fresh leaves, more preferably less than 500 ml, more preferably still less than 300 ml and most preferably less than 275 ml.

The expression step can be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof.

The time and pressure used in the expression step can be varied to yield the required amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

### Processing the Leaf Residue

In order to maximise the efficiency of the process it is preferred that the leaf residue is not discarded but is further processed to produce a commercially viable product, such as leaf tea and/or tea extract. In a particularly preferred embodiment, the process comprises an additional step (c) wherein the leaf residue is processed to produce leaf tea.

The leaf residue may be processed to produce green leaf tea, black leaf tea or oolong leaf tea, more preferably black leaf tea.

The manufacturing processes of leaf teas are well known and suitable processes are described, for example, in "Tea: Cultivation to Consumption", K.C. Willson and M.N. Clifford (Eds), 1st Edn, 1992, Chapman & Hall (London), Chapters 13 and 14.

A step common to manufacture of all leaf teas is a drying step. In the case of oolong and black leaf tea, the drying step usually also serves to deactivate the fermentation enzymes. Efficient drying requires high temperatures and so it is preferred that step (c) of the process comprises drying the leaf residue at a temperature of at least 75°C, more preferably at least 90°C.

### Processing the Juice

Tea juice separated from the leaf residue typically has a high content of water-soluble tea solids and is a valuable raw material for producing tea products.

The juice may be used to produce a green tea product, an oolong tea product or a black tea product, most preferably a black tea product.

In one embodiment the juice may be packaged directly as a packaged beverage precursor. The package may be for example a sachet, pouch, capsule or bottle. The juice is preferably sanitised e.g. by pasteurisation or sterilisation.

In one embodiment the tea juice is diluted to produce a beverage.

The juice is preferably diluted with an aqueous medium, preferably water. The beverage typically comprises at least 85% water, more preferably at least 90%, optimally between 95 and 99.9% by weight of the beverage. The beverage is preferably packaged. The package will typically be a bottle, can, carton or pouch. The beverage is preferably sanitised e.g. by pasteurisation or sterilisation.

In one embodiment the tea juice is dried to produce a liquid concentrate or powder. Preferably the juice is dried to a moisture content of less than 80% by weight, more preferably less than 50% by weight, more preferably still less than 30% by weight and most preferably less than 10% by weight. Any suitable drying process may be used including spray drying, freeze drying, oven drying, tray drying, vacuum drying or a combination thereof. The concentrate or powder may, for example, be diluted or dissolved to produce a beverage, used as a food additive and/or used as a starting material for producing other tea-derived materials.

### The Tea Juice

The tea juices of the present invention are found to be suitable for dilution to produce beverages with a taste and colour more familiar to tea consumers. Without wishing to be bound by theory we believe that this may, in part, be due to the relatively high amount of caffeine with respect to polyphenols in the inventive juices.

Thus the tea juice preferably comprises polyphenols and caffeine wherein the weight ratio of caffeine to total polyphenols is at least 0.19, more preferably at least 0.20, more preferably still at least 0.21 and most preferably from 0.22 to 0.30.

The tea juice preferably comprises caffeine in an amount of at least 1.8 mg/ml, more preferably at least 2.0 mg/ml, more preferably still at least 2.2 mg/ml and most preferably from 2.4 to 3.0 mg/ml.

The tea juice preferably comprises total polyphenols in an amount of at least 9.0 mg/ml, more preferably at least 10.0 mg/ml and most preferably from 10.5 to 14 mg/ml.

The tea juice preferably comprises tea solids in an amount of at least 7.0% by weight, more preferably from 7.5 to 10% by weight.

The tea juice is preferably black tea juice.

### EXAMPLES

The present invention will be further described with reference to the following examples.

### Example 1

This Example demonstrates the effect of the temperature of fresh tea leaves on the composition of tea juice expressed from them.

### Production of Juice

Fresh tea leaves were macerated using a CTC machine and the resulting dhool fermented for 2 hours at 25 °C. Directly following fermentation a portion of the dhool was pressed in a hydraulic press to yield a first sample of tea juice (Sample 1). The remaining fermented dhool was heated in a steamer until the temperature of the dhool reached 50 °C and then directly pressed in a hydraulic press to yield a second sample of tea juice (Sample 2). Both samples were centrifuged and then passed through a 0.2 □m filter to remove insoluble solids.

### Composition of Juice

The juices were analysed for total solids content, caffeine content and total polyphenol content. The results are shown in Table 1.

**TABLE 1**

| Sample | Pressing Temperature (°C) | Solids (%wt) | (A) Caffeine (mg/ml) | (B) Total Polyphenols (mg/ml) | (A)/(B) |
|---|---|---|---|---|---|
| 1 | 25 | 7.6 | 1.6 | 8.9 | 0.18 |
| 2 | 50 | 8.6 | 2.6 | 11.0 | 0.24 |

The juice pressed at high temperature had a higher level of solids than the ambient juice. Furthermore the proportion of caffeine in the high temperature juice was much higher than in the ambient juice.

### Example 2

This Example demonstrates the effect of the temperature of fresh tea leaves on the yield of tea juice and the properties of beverages prepared from the tea juice.

### Production of Juice

Juice was produced as described in Example 1 except that 4 samples of juice were produced by pressing dhool heated to the following temperatures:
Sample 3 -Ambient (25 °C).
Sample 4 - 50 °C.
Sample 5 - 75 °C.
Sample 6 -100 °C.

### Yield of Juice

The amount of juice expressed for each sample is given in Table 2.

**TABLE 2**

| Sample | Pressing Temperature (°C) | Solids (%wt) | Yield (ml per kg of fresh leaves) |
|---|---|---|---|
| 3 | 25 | 7.2 | 240 |
| 4 | 50 | 7.2 | 220 |
| 5 | 75 | 7.6 | 130 |
| 6 | 100 | 8.2 | 70* |

| | | | |
|---|---|---|---|
| * Juice was extremely viscous and difficult to separate from residual leaf. | | | |

The data in Table 2 illustrates that at very high temperatures the yield of juice decreases markedly.

### Taste and Colour of Beverages

Beverages were prepared by dissolving 8 ml of each of Samples 3-6 in 200 ml of freshly boiled water.

Beverages prepared from Sample 4 had a more bitter and tea-like taste than those from Sample 3. Bitterness and astringency increased with pressing temperature. The beverage prepared from Sample 6 had extreme bitterness and astringency without other tea flavour.

The high temperature pressed juices gave beverages with a darker colour (more akin to the conventional tea beverages) than those prepared from Sample 3.

## Claims

1. A process comprising the steps of:
a) heating fresh tea leaves; and
b) expressing juice from the fresh tea leaves whilst the temperature of the fresh tea leaves is greater than 40 °C and less than 77 °C, thereby to produce leaf residue and tea juice.

2. The process as claimed in claim 1 wherein in step (b) the juice is expressed whilst the temperature of the fresh tea leaves is at least 42 °C.

3. The process as claimed in claim 2 wherein in step (b) the juice is expressed whilst the temperature of the fresh tea leaves is at least 45 °C.

4. The process as claimed in any one of claims 1 to 3 wherein in step (b) the juice is expressed whilst the temperature of the fresh tea leaves is less than 75 °C.

5. The process as claimed in claim 4 wherein in step (b) the juice is expressed whilst the temperature of the fresh tea leaves is less than 70 °C.

6. The process as claimed in any one of the preceding claims wherein the fresh tea leaves are macerated to produce dhool prior to step (a).

7. The process as claimed in claim 6 wherein the dhool is fermented prior to step (a) and the juice is black tea juice.

8. The process as claimed in any one of the preceding claims wherein the moisture content of the fresh leaves during the expression step (b) is between 60 and 90% by weight.

9. The process as claimed in any one of the preceding claims wherein the amount of juice expressed in step (b) is between 100 and 800 ml per kg of fresh tea leaves.

10. A tea juice obtainable by the process of any one of claims 1 to 9.

11. The tea juice as claimed in claim 10 wherein the tea juice comprises polyphenols and caffeine and wherein the weight ratio of caffeine to total polyphenols is at least 0.19.

12. The tea juice as claimed in claim 11 wherein the weight ratio of caffeine to total polyphenols is from 0.20 to 0.30.

13. The tea juice as claimed in any one of claims 10 to 12 wherein the tea juice comprises tea solids in an amount of at least 7.0% by weight.

14. An expressed tea juice comprising polyphenols and caffeine and wherein the weight ratio of caffeine to total polyphenols is at least 0.19, preferably from 0.20 to 0.30.

15. The expressed tea juice as claimed in claim 14 wherein the tea juice comprises tea solids in an amount of at least 7.0% by weight.

## Patentansprüche

1. Verfahren,
das die folgenden Schritte aufweist:
a) Erhitzen von frischen Teeblättern; und
b) Auspressen von Saft aus den frischen Teeblättern, wobei die Temperatur der frischen Teeblätter höher als 40 °C und niedriger als 77 °C ist, um dadurch einen Blattrückstand und Teesaft zu erzeugen.

2. Verfahren nach Anspruch 1,
wobei der Saft im Schritt b) ausgepresst wird, während die Temperatur der frischen Teeblätter mindestens 42 °C beträgt.

3. Verfahren nach Anspruch 2,
wobei der Saft im Schritt b) ausgepresst wird, während die Temperatur der frischen Teeblätter mindestens 45 °C beträgt.

4. Verfahren nach einem der Ansprüche 1 bis 3,
wobei der Saft im Schritt b) ausgepresst wird, während die Temperatur der frischen Teeblätter weniger als 75 °C beträgt.

5. Verfahren nach Anspruch 4,
wobei der Saft im Schritt b) ausgepresst wird, während die Temperatur der frischen Teeblätter weniger als 70 °C beträgt.

6. Verfahren nach einem der vorstehenden Ansprüche,
wobei die frischen Teeblätter vor dem Schritt a) mazeriert werden, um einen Dhool zu erzeugen.

7. Verfahren nach Anspruch 6,
wobei der Dhool vor dem Schritt a) fermentiert wird und der Saft Saft von Schwarzem Tee ist.

8. Verfahren nach einem der vorstehenden Ansprüche,
wobei der Feuchtigkeitsgehalt der frischen Blätter beim Auspressschritt b) 60 bis 90 Gew.-% beträgt.

9. Verfahren nach einem der vorstehenden Ansprüche,
wobei die im Schritt b) ausgepresste Saftmenge 100 bis 800 ml pro kg frischer Teeblätter beträgt.

10. Teesaft,
der nach dem Verfahren nach einem der Ansprüche 1 bis 9 erhalten werden kann.

11. Teesaft nach Anspruch 10,
wobei der Teesaft Polyphenole und Koffein aufweist und wobei das Gewichtsverhältnis zwischen Koffein und gesamten Polyphenolen mindestens 0,19 beträgt.

12. Teesaft nach Anspruch 11,
wobei das Gewichtsverhältnis zwischen Koffein und gesamten Polyphenolen 0,20 bis 0,30 beträgt.

13. Teesaft nach einem der Ansprüche 10 bis 12,
wobei der Teesaft Teefeststoffe in einer Menge von mindestens 7,0 Gew.-% aufweist.

14. Ausgepresster Teesaft,
der Polyphenole und Koffein aufweist, wobei das Gewichtsverhältnis zwischen Koffein und den gesamten Polyphenolen mindestens 0,19, vorzugsweise 0,20 bis 0,30 beträgt.

15. Ausgepresster Teesaft nach Anspruch 14,
wobei der Teesaft Teefeststoffe in einer Menge von mindestens 7,0 Gew.-% aufweist.

## Revendications

1. Procédé comprenant les étapes consistant :
a) à chauffer des feuilles de thé fraîches ; et
b) à exprimer du jus à partir des feuilles de thé fraîches alors que la température des feuilles de thé fraîches est supérieure à 40°C et inférieure à 77°C, pour produire par-là un résidu de feuilles et du jus de thé.

2. Procédé selon la revendication 1, dans lequel dans l'étape (b) le jus est exprimé alors que la température des feuilles de thé fraîches est d'au moins 42°C.

3. Procédé selon la revendication 2, dans lequel dans l'étape (b) le jus est exprimé alors que la température des feuilles de thé fraîches est d'au moins 45°C.

4. Procédé selon l'une quelconque des revendications 1 à 3, dans lequel dans l'étape (b) le jus est exprimé alors que la température des feuilles de thé fraîches est inférieure à 75°C.

5. Procédé selon la revendication 4, dans lequel dans l'étape (b) le jus est exprimé alors que la température des feuilles de thé fraîches est inférieure à 70°C.

6. Procédé selon l'une quelconque des revendications précédentes, dans lequel les feuilles de thé fraîches sont macérées pour produire du dhool avant l'étape (a).

7. Procédé selon la revendication 6, dans lequel le dhool est fermenté avant l'étape (a) et le jus est du jus de thé noir.

8. Procédé selon l'une quelconque des revendications précédentes, dans lequel la teneur en humidité des feuilles fraîches pendant l'étape d'expression (b) est de 60 à 90 % en poids.

9. Procédé selon l'une quelconque des revendications précédentes, dans lequel la quantité de jus exprimé dans l'étape (b) est de 100 à 800 ml par kg de feuilles de thé fraîches.

10. Jus de thé pouvant être obtenu par le procédé selon l'une quelconque des revendications 1 à 9.

11. Jus de thé selon la revendication 10, dans lequel le jus de thé comprend des polyphénols et de la caféine et dans lequel le rapport massique de caféine à la totalité des polyphénols est d'au moins 0,19.

12. Jus de thé selon la revendication 11, dans lequel le rapport massique de caféine à la totalité des polyphénols est de 0,20 à 0,30.

13. Jus de thé selon l'une quelconque des revendications 10 à 12, dans lequel le jus de thé comprend des matières solides de thé dans une quantité d'au moins 7,0 % en poids.

14. Jus de thé exprimé comprenant des polyphénols et de la caféine et dans lequel le rapport massique de caféine à la totalité des polyphénols est d'au moins 0,19, de préférence de 0,20 à 0,30.

15. Jus de thé exprimé selon la revendication 14, dans lequel le jus de thé comprend des matières solides de thé dans une quantité d'au moins 7,0 % en poids.
